# FASCICULE DE BREVET EUROPEEN

(11) **EP 0 749 194 B1**
(45) Date de publication et mention de la délivrance du brevet: **01.12.1999**
(21) Numéro de dépôt: 96401251.2
(22) Date de dépôt: 11.06.1996
(51) Int. Cl.: H02K 3/18

(54) **Démarreur de véhicule automobile muni d'un bobinage inducteur d'épaisseur réduite**
Fahrzeuganlasser mit einer reduzierten Dicke-Erregerspule
Motorvehicle starter comprising field coil of reduced thickness

(30) Priorité: 12.06.1995 FR 9507047
(43) Date de publication de la demande: 18.12.1996
(73) Titulaire: VALEO EQUIPEMENTS ELECTRIQUES MOTEUR, 94000 Créteil (FR)
(72) Inventeur: Halter, Richard, 69960 Corbas (FR)
(74) Mandataire: Kohn, Philippe

(56) Documents cités:
- FR-A- 2 417 878
- US-A- 2 866 955

## Description

L'invention concerne un démarreur pour véhicule automobile.

L'invention concerne plus particulièrement un démarreur pour véhicule automobile du type comportant un bobinage inducteur composé d'enroulements formant chacun un pôle magnétique de l'inducteur, du type dans lequel chaque enroulement comporte un conducteur de forte section enroulé à plat de manière à former des spires jointives concentriques, et du type dans lequel la spire interne de l'enroulement se prolonge par un rabat du conducteur qui s'étend radialement vers l'extérieur de l'enroulement, sensiblement dans le plan des spires et en chevauchant celle-ci.

Une telle conception des enroulements du bobinage statorique inducteur permet d'obtenir un champ magnétique intense pour un encombrement réduit du bobinage.

Toutefois, dans le but d'obtenir des démarreurs encore plus puissants, on est amené à augmenter la section du conducteur formant les enroulements afin d'augmenter l'intensité du courant parcourant le bobinage pour obtenir une augmentation proportionnelle de l'intensité du champ magnétique induit.

Toutefois, afin d'augmenter l'espace dévolu au passager du véhicule, les constructeurs automobiles cherchent à minimiser l'encombrement du groupe motopropulseur dont fait partie le démarreur.

Ainsi, on est amené à concevoir des démarreurs de taille la plus réduite possible tout en conservant une puissance suffisante pour le démarrage du moteur.

Dans ce but, l'invention propose un démarreur du type vu précédemment, caractérisé en ce que, dans sa zone de chevauchement des spires, le rabat du conducteur est de dimensions réduites dans la direction de l'axe des spires de manière à diminuer l'épaisseur axiale de l'enroulement dans cette zone.

Selon d'autres caractéristiques de l'invention :
- la section de passage du courant dans le conducteur est constante au niveau du rabat, et le conducteur est de dimension élargie selon une direction transversale ;
- le rabat est déformé par écrasement selon la direction axiale de l'enroulement ;
- le conducteur présente une section sensiblement rectangulaire, il est enroulé dans le sens de son épaisseur, le rabat est délimité par un double pliage du conducteur au niveau de la spire interne qui est déviée successivement dans une direction axiale des spires puis dans une direction radiale des spires et l'écrasement du conducteur est réalisé avant la deuxième opération de pliage ;
- un élément isolant est interposé entre le rabat du conducteur et les spires de l'enroulement qu'il chevauche.

Les caractéristiques et avantages de l'invention apparaîtront à la lecture de la description détaillée qui suit pour la compréhension de laquelle on se reportera aux dessins annexés dans lesquels :
- La figure 1 est une vue générale en coupe axiale partielle d'un démarreur de véhicule automobile ;
- la figure 2 représente un enroulement de bobinage inducteur réalisé selon l'état de la technique ;
- la figure 3 est un détail agrandi de la figure 1 qui représente l'agencement d'un enroulement selon l'état de la technique à l'intérieur du démarreur ;
- la figure 4 représente un enroulement de bobinage conforme aux enseignements de l'invention ;
- la figure 5 est une vue en section d'un tel enroulement.

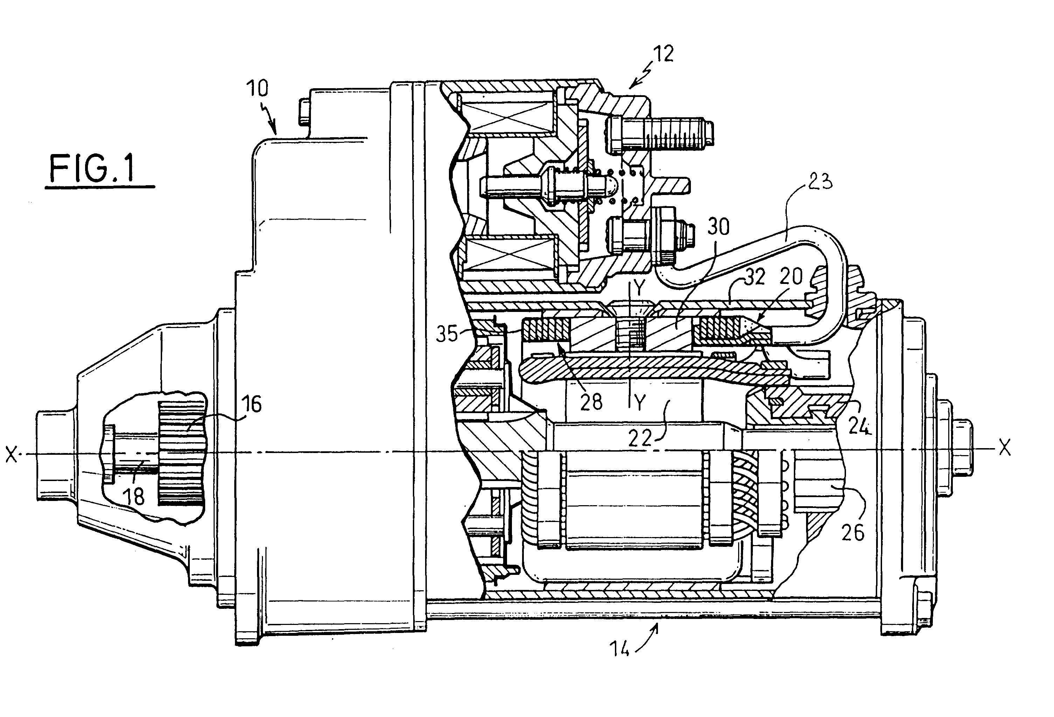

La figure 1 représente un démarreur 10 qui comporte essentiellement un contacteur 12 et un moteur de démarreur 14 destiné à entraîner un pignon de démarreur 16.

Le pignon de démarreur 16 est monté coulissant sur une extrémité de l'arbre moteur 18 du démarreur, d'axe X-X, et le pignon de démarreur 16 est prévu pour s'engrener avec une roue dentée (non représentée) d'un volant d'inertie du moteur à combustion du véhicule automobile équipé du démarreur.

Le moteur 14 du démarreur 10 comporte un bobinage statorique 20 inducteur et un bobinage rotorique 22 induit qui sont couplés électriquement en série.

Un câble d'alimentation 23 relie la sortie du contacteur 12 à l'entrée du bobinage inducteur 20 et la sortie du bobinage inducteur 20 est reliée à des balais (non représentés) qui frottent sur des lames conductrices 24 d'un collecteur 26 qui alimentent le bobinage rotorique induit 22.

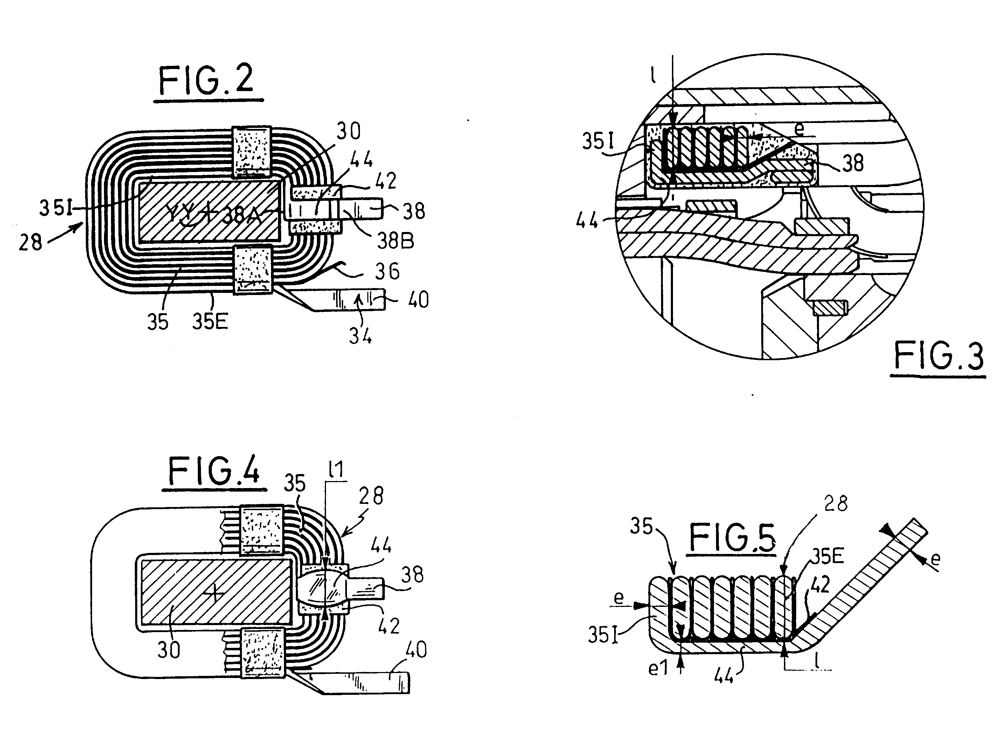

Le bobinage inducteur 20 comporte généralement deux paires d'enroulements 28, tels que celui représenté à la figure 2, qui sont enroulés chacun autour d'une masse polaire 30 vissée dans le carter cylindrique 32 du moteur 14 de démarreur.

Chaque enroulement 28 est agencé de manière que son axe d'enroulement Y-Y soit agencé radialement dans le carter 32.

Le rotor est monté dans le stator de manière à laisser subsister un entrefer réduit qui permet toutefois d'éviter tout contact entre le rotor et le stator.

Comme on peut le voir notamment sur la figure 3, un enroulement statorique 28 est composé d'un conducteur continu 34 dont la section rectangulaire est de largeur "I" supérieure à son épaisseur "e".

Le conducteur 34 est enroulé autour de la masse polaire 30, dans le sens de son épaisseur, de manière à former des spires jointives concentriques 35 de diamètre croissant.

Les spires sont isolées électriquement l'une de l'autre par un ruban isolant 36 dont la largeur est sensiblement identique à celle du conducteur 34 et qui est enroulé simultanément avec le conducteur 34.

Les deux extrémités 38, 40 du conducteur 34 prolongent respectivement la spire interne 35I et la spire externe 35E de l'enroulement 28 et permettent la connexion électrique de cet enroulement 28 avec un autre enroulement, avec le câble d'alimentation 23 ou avec un balai.

L'extrémité 40 du conducteur 34 qui prolonge la spire externe 35E est torsadée de manière à ce que son épaisseur soit ramenée dans le plan des spires.

L'extrémité 38 du conducteur 34 qui prolonge la spire interne 35I de l'enroulement 28 est déviée radialement vers l'extérieur de l'enroulement 28 par un double pliage qui, dans une première phase 38A, dévie le conducteur 34 de manière à l'amener dans une direction parallèle à l'axe Y-Y des spires 35 et, dans une seconde phase 38B, le rabat radialement vers l'extérieur de manière à chevaucher l'empilement des spires 35.

Une pastille isolante 42 est interposée entre le rabat 44 ainsi formé et les spires de l'enroulement 28.

L'enroulement 28 ainsi constitué peut être alors raccordé au reste du circuit électrique du moteur 14 du démarreur.

Comme on peut le voir sur la figure 3, l'encombrement du moteur 14 du démarreur est en partie lié à l'encombrement de l'enroulement 28.

Cela peut se révéler gênant lorsque, pour augmenter la puissance du démarreur, on augmente la section de passage du conducteur 34 pour permettre le passage de courants de plus forte intensité.

La tendance est alors à éviter de trop augmenter l'épaisseur du conducteur 34 sous peine de réduire de nombre de spires 35 de l'enroulement 28.

Pour augmenter la section du conducteur 34, on est donc contraint d'augmenter essentiellement sa largeur "I", ce qui a pour conséquence d'augmenter son encombrement radial dans le carter 32 du moteur 14 de démarreur.

Si l'on ne souhaite pas changer les dimensions des autres éléments du démarreur, on est rapidement limité par la nécessité de maintenir un entrefer suffisant entre l'enroulement 28 et le bobinage induit 22.

Cela est particulièrement critique dans la zone du rabat 44 de l'extrémité 38 du conducteur 34 reliée à la spire interne de l'enroulement 28 car, dans cette zone, l'encombrement radial de l'enroulement 28 est la somme de la largeur "I" du conducteur 34 et de l'épaisseur "e" du rabat 44 de l'extrémité 38 de ce même conducteur 34.

Aussi, l'invention propose, comme cela est représenté sur les figures 4 et 5, de réduire l'épaisseur "e" du conducteur 34 dans la zone de chevauchement 44 en écrasant celle-ci dans le sens de l'épaisseur pour la réduire à une épaisseur "e1" et inférieure à "e".

On obtient ainsi une diminution de l'encombrement total de l'enroulement 28 à l'intérieur du moteur 14 de démarreur sans diminuer la section de passage du courant, ce qui aurait pour effet de créer un point chaud dans l'enroulement 28 nuisible au bon fonctionnement du démarreur. A cet effet le rabat 44 présente une largeur "l1" supérieure à la largeur "I" du conducteur 34.

De manière préférée, on pourra prévoir de réaliser cet écrasement préalablement à la phase de rabattement de l'extrémité 38 sur les spires de l'enroulement 28.

L'invention a été décrite dans le cadre de la réalisation d'un bobinage inducteur utilisant un conducteur distinct pour chaque enroulement.

On pourra toutefois appliquer les enseignements de l'invention aux bobinages inducteurs comportant des enroulements réalisés en continu avec le même conducteur 34 mais qui présentent également une zone de chevauchement prolongeant la spire interne de chaque enroulement.

A titre de variante (non représentée), et sans sortir du cadre de l'invention, la réduction du l'encombrement peut être obtenue en écrasant localement l'enroulement 28 pour former une rainure qui reçoit le rabat 44.

## Revendications

1. Démarreur pour véhicule automobile du type comportant un bobinage inducteur (20) composé d'enroulements (28) formant chacun un pôle magnétique de l'inducteur, du type dans lequel chaque enroulement (28) comporte un conducteur (34) de forte section enroulé à plat de manière à former des spires jointives concentriques (35), du type dans lequel la spire interne (351) de l'enroulement (28) se prolonge par un rabat (44) du conducteur qui s'étend radialement vers l'extérieur de l'enroulement, sensiblement dans le plan des spires (35) et en chevauchant celles-ci, caractérisé en ce que, dans sa zone de chevauchement (44) des spires, le rabat (44) du conducteur (34) est de dimension réduite (e1) dans la direction de l'axe (Y-Y) des spires (35) de manière à diminuer l'épaisseur axiale (I+e1) de l'enroulement (28) dans cette zone.

2. Démarreur selon la revendication 1, caractérisé en ce que la section de passage du courant dans le conducteur (34) est constante, et en ce que, au niveau du rabat (44), le conducteur (34) est de dimension élargie (l1) selon une direction transversale.

3. Démarreur selon la revendication 2, caractérisé en ce que le rabat (44) est déformé par écrasement selon la direction axiale (Y-Y) de l'enroulement (28).

4. Démarreur selon la revendication 3, caractérisé en ce que le conducteur (34) présente une section sensiblement rectangulaire, en ce qu'il est enroulé dans le sens de son épaisseur (e), en ce que le rabat (44) est délimité par un double pliage (38A) du conducteur au niveau de la spire interne (35I) qui est déviée successivement dans une direction axiale des spires puis dans une direction radiale des spires et en ce que l'écrasement (44) du conducteur (34) est réalisé avant la deuxième opération de pliage.

5. Démarreur selon l'une quelconque des revendications précédentes, caractérisé en ce qu'un élément isolant (42) est interposé entre le rabat (44) du conducteur (34) et les spires (35) de l'enroulement (28) qu'il chevauche.

## Patentansprüche

1. Kraftfahrzeuganlasser, umfassend eine Erregerspule (20), die aus Wicklungen (28) besteht, die jeweils einen Magnetpol der Erregerspule bilden, wobei jede Wicklung (28) einen Leiter (34) mit großem Querschnitt umfaßt, der flach gewickelt ist, um aneinanderstoßende konzentrische Windungen (35) zu bilden, und wobei die innere Windung (35I) der Wicklung (28) durch eine Umbiegung (44) des Leiters verlängert wird, die sich radial aus der Wicklung heraus, in etwa in der Ebene der Windungen (35) und diese überlagernd, erstreckt, **dadurch gekennzeichnet**, daß in seinem Überlagerungsbereich (44) der Windungen die Umbiegung (44) des Leiters (34) eine geringe Abmessung (el) in der Richtung der Achse (Y-Y) der Windungen (35) aufweist, um die axiale Dicke (I+e1) der Wicklung (28) in diesem Bereich zu verringern.

2. Anlasser nach Anspruch 1, **dadurch gekennzeichnet**, daß der Stromdurchgangsquerschnitt im Leiter (34) konstant ist und daß der Leiter (34) in Höhe der Umbiegung (44) eine erweiterte Abmessung (11) entlang einer Querrichtung aufweist.

3. Anlasser nach Anspruch 2, **dadurch gekennzeichnet**, daß die Umbiegung (44) durch Eindrücken entlang der axialen Richtung (Y-Y) der Wicklung (28) verformt ist.

4. Anlasser nach Anspruch 3, **dadurch gekennzeichnet**, daß der Leiter (34) einen in etwa rechteckigen Querschnitt aufweist, daß er in der Richtung seiner Dicke (e) aufgewickelt ist, daß die Umbiegung (44) durch eine doppelte Biegung (38A) des Leiters in Höhe der inneren Windung (35I) begrenzt ist, die nacheinander in einer axialen Richtung der Windungen und anschließend in einer radialen Richtung der Windungen verlagert ist, und daß die Eindrückung (44) des Leiters (34) vor dem zweiten Biegevorgang erfolgt.

5. Anlasser nach einem der vorangehenden Ansprüche, **dadurch gekennzeichnet**, daß ein Isolierelement (42) zwischen der Umbiegung (44) des Leiters (34) und den Windungen (35) der Wicklung (28), die sie überlagert, eingefügt ist.

## Claims

1. A starter for a motor vehicle, of the type comprising a field winding (20) consisting of coils (28), each of which constitutes a magnetic pole of the field winding, of the type in which each coil (28) comprises a conductor (34) of large cross section, rolled flat in such a way as to define concentric interleaved turns (35), of the type in which the innermost turn (351) of the coil (28) is extended by a tongue (44) of the conductor which extends radially towards the outside of the coil, substantially in the plane of the turns (35) and overlapping the latter, characterised in that, in its zone (44) overlapping the turns, the tongue (44) of the conductor (34) has a reduced dimension (el) in the direction of the axis (Y-Y) of the turns (35), so as to reduce the axial thickness (1 + e1) of the coil (28) in that zone.

2. A starter according to Claim 1, characterised in that the passage cross section for the current in the conductor (34) is constant, and in that, in the region of the tongue (44), the conductor (34) is wider (11) in a transverse direction.

3. A starter according to Claim 2, characterised in that the tongue (44) is deformed by squeezing in the axial direction (Y-Y) of the winding (28).

4. A starter according to Claim 3, characterised in that the conductor (34) has a substantially rectangular cross section, in that it is wound in the direction of its thickness (e), in that the tongue (44) is delimited by a double bend (38A) of the conductor in its innermost turn (351), which is diverted successively in an axial direction of the turns and then in a radial direction of the turns, and in that the squeezing (44) of the conductor (34) is carried out prior to the second bending operation.

5. A starter according to any one of the preceding Claims, characterised in that an insulating element (42) is interposed between the tongue (44) of the conductor (34) and the turns (35) of the coil (28) which it straddles.
